(19) Europäisches Patentamt
European Patent Office
Office européen des brevets

(11) **EP 3 309 955 A1**

(12) **EUROPÄISCHE PATENTANMELDUNG**

(43) Veröffentlichungstag:
18.04.2018 Patentblatt 2018/16

(51) Int Cl.:
*H02P 27/06* (2006.01)  *H02P 23/04* (2006.01)
*H02P 6/10* (2006.01)

(21) Anmeldenummer: 16193303.1

(22) Anmeldetag: 11.10.2016

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Hilscher, Martin**
**91056 Erlangen (DE)**
• **Kalbfleisch, Peter**
**90587 Obermichelbach (DE)**
• **Zurowski, Rainer**
**91301 Forchheim (DE)**

(54) **BETREIBEN EINES UMRICHTERS ZUM KOPPELN EINER FÜR EINEN BETRIEB AN WECHSELSPANNUNG AUSGEBILDETEN ELEKTRISCHEN MASCHINE MIT EINEM WECHSELSPANNUNGSNETZ**

(57) Die Erfindung betrifft ein Verfahren zum Betreiben eines Umrichters (10,48,50) zum Koppeln einer für einen Betrieb an Wechselspannung ausgebildeten elektrischen Maschine (12,46) mit einem Wechselspannungsnetz (16), mit den Schritten:
- Ermitteln eines drehmomentbezogenen Maschinenstromanteils aus elektrischen Maschinenströmen der elektrischen Maschine (12),
- Erfassen eines Ist-Werts für einen magnetischen Fluss,
- Ermitteln eines Ist-Werts eines Maschinendrehmoments der elektrischen Maschine (12,46) durch Verknüpfen des erfassten magnetischen Flusses mit dem drehmomentbezogenen Maschinenstromanteil,

- Ermitteln einer Drehmomentdifferenz zwischen dem Ist-Wert des Maschinendrehmoments und einem Soll-Wert des Maschinendrehmoments der elektrischen Maschine (12,46),
- Filtern der Drehmomentdifferenz mittels eines Bandpassfilters (28), welches auf eine maschinenseitige Eigenfrequenz abgestimmt ist,
- Ermitteln eines Kompensationssignals (30) durch Verarbeiten eines Filterausgangssignals (32) des Bandpassfilters (28), und
- Überlagern des Kompensationssignals (30) zu dem Netzsteuersignal und/oder dem Maschinensteuersignal.

FIG 6

EP 3 309 955 A1

**Beschreibung**

Die Erfindung betrifft ein Verfahren zum Betreiben eines Umrichters zum Koppeln einer für einen Betrieb an Wechselspannung ausgebildeten elektrischen Maschine mit einem Wechselspannungsnetz, bei dem ein an das Wechselspannungsnetz angeschlossener netzseitiger Wechselrichter des Umrichters mittels eines Gleichstromzwischenkreises mit einem an die elektrische Maschine angeschlossenen maschinenseitigen Wechselrichter des Umrichters elektrisch gekoppelt wird, wobei ein Wandeln von elektrischer Energie durch den netzseitigen Wechselrichter mittels eines Netzsteuersignals und ein Wandeln von elektrischer Energie durch den maschinenseitigen Wechselrichter mittels eines Maschinensteuersignals der Steuereinheit gesteuert wird. Darüber hinaus umfasst die Erfindung ein Rechnerprogrammprodukt. Schließlich umfasst die Erfindung auch eine Steuereinheit zum Betreiben eines Umrichters zum Koppeln einer für einen Betrieb an Wechselspannung ausgebildeten elektrischen Maschine mit einem Wechselspannungsnetz, zu welchem Zweck der Umrichter einen an das Wechselspannungsnetz angeschlossenen netzseitigen Wechselrichter und einen an die elektrische Maschine angeschlossenen maschinenseitigen Wechselrichter aufweist, die zum elektrischen Koppeln an einen Gleichstromzwischenkreis angeschlossen sind, wobei die Steuereinheit einen netzseitigen Anschluss zum Anschließen an den netzseitigen Wechselrichter aufweist und ausgebildet ist, am netzseitigen Anschluss ein Netzsteuersignal zum Steuern des netzseitigen Wechselrichters bereitzustellen, und wobei die Steuereinheit einen maschinenseitigen Anschluss zum Anschließen an den maschinenseitigen Wechselrichter aufweist und ausgebildet ist, am maschinenseitigen Anschluss ein Maschinensteuersignal zum Steuern des maschinenseitigen Wechselrichters bereitzustellen.

Erfindungsgemäße Verfahren zum Betreiben derartiger Umrichter sowie Steuereinheiten zu deren Steuerung sind im Stand der Technik bekannt, beispielsweise aus der DE 10 2000 11079 995 A1, die ein Verfahren zum Betrieb einer Antriebseinheit offenbart. Umrichter der gattungsgemäßen Art dienen dazu, eine oder mehrere elektrische Maschinen, insbesondere rotierende elektrische Maschinen mit dem Wechselspannungsnetz, insbesondere einem mehrphasigen, vorzugsweise einem dreiphasigen, Wechselspannungsnetz zu koppeln. Üblicherweise werden solche Umrichter bei großen Leistungen eingesetzt, beispielsweise einem oder mehreren MW oder mehr. Bei derart großen Leistungen ergeben sich besondere Anforderungen, weil der Betrieb der elektrischen Maschine über den Umrichter zu Wechselwirkungen mit dem Wechselspannungsnetz führen kann. Da die elektrische Maschine in der Regel für den Betrieb mit Wechselspannung bzw. Wechselstrom ausgebildet ist, ist es erforderlich, dass der Umrichter eine energietechnische Kopplung zwischen der Wechselspannung bzw. einem Wechselstrom auf der Netzseite und einer Wechselspannung bzw. einem Wechselstrom auf der Maschinenseite herstellt. Zu diesem Zweck ist der netzseitige Wechselrichter vorgesehen, der mit seiner Wechselspannungs- bzw. Wechselstromseite an das Wechselspannungsnetz und mit seiner Gleichstromseite an den Gleichstromzwischenkreis angeschlossen ist. Darüber hinaus umfasst der Umrichter den zweiten maschinenseitigen Umrichter, der gleichstromseitig an den Gleichstromzwischenkreis und wechselspannungsseitig bzw. wechselstromseitig an die elektrische Maschine angeschlossen ist. Die beiden Wechselrichter sind somit durch den Gleichstromzwischenkreis elektrisch miteinander gekoppelt, sodass ein Energiefluss vom Wechselspannungsnetz zur elektrischen Maschine und vorzugsweise auch umgekehrt erfolgen kann.

Ein Wechselrichter ist eine elektrische Einrichtung, die der Energiewandlung dient. Der Wechselrichter stellt eine elektrische Kopplung zwischen einer Wechselspannung bzw. einem Wechselstrom auf der einen Seite und einer Gleichspannung bzw. einem Gleichstrom auf der anderen Seite her. Zu diesem Zweck umfasst der Wechselrichter in der Regel eine Mehrzahl von Halbleiterschaltern, die in geeigneter Weise aufgrund eines Steuersignals, nämlich des Netzsignals bzw. des Maschinensignals, gesteuert werden, um in vorgegebener Weise eine Energiewandlung auszuführen. Bei den vorliegend zu wandelnden Leistungen sind als Halbleiterschalter in der Regel Thyristoren vorgesehen. Dem Grunde nach können die Halbleiterschalter jedoch auch durch Transistoren, beispielsweise bipolare Transistoren, Feldeffekttransistoren oder dergleichen, gebildet sein.

Umfasst der Umrichter lediglich den maschinenseitigen und den netzseitigen Wechselrichter, muss die durch einen der Wechselrichter dem Gleichstromzwischenkreis zugeführte elektrische Energie durch den anderen der beiden Wechselrichter wieder abgeführt werden. Die gewandelte Leistung ist somit durch Steuern der beiden Wechselrichter mittels der ihnen zugeordneten Steuersignale der Steuereinheit einzustellen. Als Energiespeicher des Gleichstromzwischenkreises dient eine elektrische Spule mit einer entsprechend der zu speichernden elektrischen Energie gewählten Induktivität.

An der elektrischen Maschine können im bestimmungsgemäßen Betrieb Pendelmomente auftreten, insbesondere Interharmonische Pendelmomente, die dadurch hervorgerufen werden können, dass eine Netzseite und eine Maschinenseite des Umrichters nicht immer vollständig entkoppelt werden können. In der Regel sind die Amplituden der Pendelmomente vergleichsweise klein, häufig kleiner als 2% eines Bemessungsmomentes. Werden jedoch mechanische Eigenfrequenzen der elektrischen Maschine angeregt, beispielsweise Eigenfrequenzen, die kleiner als 50Hz sind, können maschinenseitig deutlich höhere Pendelmomente verursacht werden, insbesondere hohe Pendelmomente, die insbesondere auch kritische Betriebszustände nach sich ziehen können.

Um diese Problematik zu vermeiden, kann vorgesehen sein, dass eine Bemessungsfrequenz und eine Polpaarzahl der elektrischen Maschine für einen stationären Betrieb so gewählt werden, dass kritische Anregungen von Eigenfrequenzen vermieden werden können, beispielsweise unter Nutzung eines Campbell-Diagramms. Diese Maßnahme eignet sich natürlich lediglich für stationär unter festen vorgegebenen Betriebsbedingungen betriebenen elektrischen Maschinen.

Ist hingegen vorgesehen, dass die elektrische Maschine unterschiedliche Betriebszustände einnehmen kann, kann vorgesehen sein, dass sogenannte Ausblendbänder vorgegeben werden, die Frequenzbereiche definieren, die im bestimmungsgemäßen Betrieb nicht stationär angefahren werden können. Auch wenn sich diese Methode bewährt hat, erweist sie sich dennoch insofern als nachteilig, als dass sie unflexibel ist hinsichtlich der Belastung der elektrischen Maschine. Dies erweist sich unter anderem in Bezug auf eine Prozessführung als hinderlich, weil gegebenenfalls erforderliche Betriebszustände nicht stationär betrieben werden können. Ändert sich nämlich eine Belastung oder die Netzfrequenz , kann dies zum Beispiel dazu führen, dass die definierten Frequenzbereiche nicht mehr zu den tatsächlich vorliegenden Eigenfrequenzen passen und damit die zuvor beschriebene Problematik der Pendelmomentanregungen nicht mehr vermieden werden kann.

Eine weitere Möglichkeit besteht darin, tatsächliche Ist-Momente bzw. Ist-Drehmomente mittels geeigneter Sensoren zu erfassen und durch geeignetes Steuern mittels der Steuereinheit zu dämpfen. Ein derartiges Vorgehen ist beispielsweise aus der WO 2006/113230 A1 sowie auch aus der EP 2 073 375 A1 bekannt. Diese Maßnahme hat jedoch den Nachteil, dass Messaufwand hinsichtlich der mechanischen Eigenschaften an der elektrischen Maschine erforderlich ist. Insbesondere bei variierenden Kombinationen von Umrichtern mit elektrischen Maschinen kann dies einen hohen Aufwand nicht nur hinsichtlich konstruktiver Anforderungen, sondern auch hinsichtlich der Realisierung einer geeigneten Steuerung nach sich ziehen.

Der Erfindung liegt die Aufgabe zugrunde, ein verbessertes Verfahren zum Betreiben eines Umrichters sowie eine Steuereinheit hierfür anzugeben.

Zur Lösung der Aufgabe werden mit der Erfindung ein Verfahren, ein Rechnerprogrammprodukt sowie eine Steuereinheit gemäß den unabhängigen Ansprüchen vorgeschlagen.

Weitere vorteilhafte Ausgestaltungen ergeben sich anhand von Merkmalen der abhängigen Ansprüche.

Bezüglich eines ordnungsgemäßen Verfahrens wird mit der Erfindung insbesondere vorgeschlagen, dass das Verfahren die Schritte umfasst:

- Ermitteln eines drehmomentbezogenen Maschinenstromanteils aus elektrischen Maschinenströmen der elektrischen Maschine,
- Erfassen eines Ist-Werts für einen magnetischen Fluss,
- Ermitteln eines Ist-Werts eines Maschinendrehmoments der elektrischen Maschine durch Verknüpfen des erfassten magnetischen Flusses mit dem drehmomentbezogenen Maschinenstromanteil,
- Ermitteln einer Drehmomentdifferenz zwischen dem Ist-Wert des Maschinendrehmoments und einem Soll-Wert des Maschinendrehmoments der elektrischen Maschine,
- Filtern der Drehmomentdifferenz mittels eines Bandpassfilters, welches auf eine maschinenseitige Eigenfrequenz abgestimmt ist,
- Ermitteln eines Kompensationssignals durch Verarbeiten eines Filterausgangssignals des Bandpassfilters, und
- Überlagern des Kompensationssignals zu dem Netzsteuersignal und/oder dem Maschinensteuersignal.

Bezüglich eines Rechnerprogrammprodukt wird mit der Erfindung insbesondere vorgeschlagen, dass das Rechnerprogrammprodukt ein Programm für eine Rechnereinheit mit Programmcodeabschnitten eines Programms zum Ausführen der Schritte des Verfahrens gemäß der Erfindung umfasst, wenn das Programm durch die Rechnereinheit ausgeführt wird, so dass die Rechnereinheit wenigstens ein Kompensationssignal zu dem Netzsteuersignal und/oder dem Maschinensteuersignal ermittelt.

Bezüglich einer gattungsgemäßen Steuereinheit wird mit der Erfindung insbesondere vorgeschlagen, dass die Steuereinheit ausgebildet ist

- einen drehmomentbezogenen Maschinenstromanteil aus elektrischen Maschinenströmen der elektrischen Maschine zu ermitteln,
- einen Ist-Wert für einen magnetischen Fluss zu erfassen,
- einen Ist-Wert eines Maschinendrehmoments der elektrischen Maschine durch Verknüpfen des erfassten magnetischen Flusses mit dem drehmomentbezogenen Maschinenstromanteil zu ermitteln,
- eine Drehmomentdifferenz zwischen dem Ist-Wert des Maschinendrehmoments und einem Soll-Wert des Maschinendrehmoments der elektrischen Maschine zu ermitteln,
- die Drehmomentdifferenz mittels eines Bandpassfilters, welches auf eine maschinenseitige Eigenfrequenz abgestimmt ist, zu filtern,
- ein Kompensationssignal durch Verarbeiten eines Filterausgangssignals des Bandpassfilters zu ermitteln, und

- das Kompensationssignal zu dem Netzsteuersignal und/oder dem Maschinensteuersignal zu überlagern.

Die Erfindung basiert auf dem Prinzip, dass durch Modulation eines Aussteuergrades eine Leistung der elektrischen Maschine moduliert werden kann. Durch eine solche Modulation kann die Pendelleistung in der elektrischen Maschine und damit auch ein Pendelmoment im Luftspalt erzeugt werden, mittels dem die Interharmonischen im Luftspaltmoment kompensiert werden können. Insbesondere benötigt die Erfindung nur Größen, die ohnedies umrichterseitig verfügbar sind. Darüber hinaus brauchen keine technischen Daten bezüglich der elektrischen Maschine, insbesondere hinsichtlich ihrer mechanischen Eigenschaften, verfügbar zu sein. Vorzugsweise werden im Wesentlichen keine mechanischen Daten der elektrischen Maschine bzw. des gesamten Wellenstranges benötigt, wohingegen elektrische Maschinendaten in der Regel stets mit den Regelparametern bekannt sind, ausgenommen beispielsweise ein Trägheitsmoment oder eine Eigenfrequenz des Antriebsstrangs, insbesondere Wellenstrangs, der die elektrische Maschine umfassen kann.

Der wirksame magnetische Fluss kann aus erfassten Ausgangsspannungen und Ausgangsströmen des maschinenseitigen Wechselrichters ermittelt werden. Diese elektrischen Größen sind im Umrichter verfügbar. Dadurch kann auch das wirksame Drehmoment der elektrischen Maschine ermittelt werden.

Gemäß einer vorteilhaften Weiterbildung wird vorgeschlagen, dass Frequenzbereiche für Interharmonische anhand einer Netzfrequenz und einer Maschinenfrequenz ermittelt werden. Auf diese Weise lassen sich die Frequenzbereiche für die Interharmonischen anhand im Umrichter verfügbarer Größen auf einfache Weise ermitteln. Es werden also keine separaten Sensoren und/oder dergleichen benötigt.

Gemäß einer vorteilhaften Weiterbildung wird vorgeschlagen, dass das Verfahren nur für die ermittelten Interharmonischen durchgeführt wird. Dieser Weiterbildung liegt die Erkenntnis zugrunde, dass lediglich für die Interharmonischen eine entsprechende Maßnahme erforderlich ist, um die Ausbildung kritischer Schwingungszustände zu vermeiden. Außerhalb der Frequenzbereiche für die Interharmonischen braucht deshalb keine Verfahrensführung durchgeführt zu werden, weshalb ein Eingriff in eine Umrichtersteuerung bzw. in die Steuereinheit reduziert werden kann. Dadurch können Auswirkungen auf die Qualität der Steuerung des Umrichters gering gehalten werden.

Gemäß einer weiteren Ausgestaltung wird vorgeschlagen, dass das Verarbeiten des Filterausgangssignals des Bandpassfilters mittels einer Park-Transformation transformiert wird, um eine d-Komponente und eine q-Komponente zu ermitteln, Mittelwerte für die d-Komponente und die q-Komponente ermittelt werden, die Mittelwerte mittels eines PI-Reglers auf Null geregelt werden und durch eine inverse Park-Transformation das Kompensationssignal ermittelt wird. Auf diese Weise lässt sich mit geringem Aufwand das Kompensationssignal aus dem Filterausgangssignals Bandpassfilters ermitteln. Besonders vorteilhaft lässt sich diese Ausgestaltung dann anwenden, wenn es sich um eine mehrpulsige elektrische Maschine handelt, beispielsweise eine 6-pulsige oder eine 12-pulsige elektrische Maschine, oder dergleichen. Dadurch kann die Verfahrensführung in Bezug auf das Steuern des Umrichters deutlich vereinfacht werden. So ist es beispielsweise möglich, einen Vektordreher zu nutzen, der das Filterausgangssignals als Eingangssignal erhält und in Bezug auf einen Referenzwinkel ein mit dem Referenzwinkel umlaufendes Koordinatensystem bereitstellt. Da hier nur eine Eingangskomponente genutzt zu werden braucht, können somit die d-Komponente und die q-Komponente als Ausgangssignale des Vektordrehers einen Gleichanteil und einen Anteil mit einer doppelten Referenzfrequenz bereitstellen. Durch Mittelwertbildung kann dann der Anteil mit der doppelten Referenzfrequenz reduziert oder sogar vollständig unterdrückt werden.

Darüber hinaus wird vorgeschlagen, dass für die d-Komponente und die q-Komponente jeweils ein eigener PI-Regler vorgesehen wird. Dadurch können die d-Komponente und die q-Komponente unabhängig voneinander geregelt werden.

Eine weitere Ausgestaltung schlägt vor, dass die Park-Transformation und die inverse Park-Transformation mittels eines Vektordrehers unter Nutzung eines Referenzwinkels durchgeführt werden. Dadurch kann auf einfache Weise die Park-Transformation durchgeführt werden. Darüber hinaus ist es möglich, wenn die Steuereinheit bereits ohnehin einen Vektordreher umfasst, diesen zugleich auch dazu zu nutzen, das erfindungsgemäße Verfahren durchzuführen.

Vorzugsweise wird der Referenzwinkel zumindest unter Berücksichtigung eines Netzwinkels, der Netzfrequenz, der Maschinenfrequenz und eines Flusswinkels des magnetischen Flusses der elektrischen Maschine ermittelt. Dadurch kann ein Referenzwinkel bereitgestellt werden, der für die unterschiedlichsten Anwendungen im Rahmen der erfindungsgemäßen Verfahrensführung geeignet ist.

Mit der Erfindung wird ferner ein Rechnerprogrammprodukt umfassend ein Programm für eine Rechnereinheit mit Programmcodeabschnitten eines Programms zum Ausführen der Schritte des Verfahrens gemäß der Erfindung vorgeschlagen, wenn das Programm durch die Rechnereinheit ausgeführt wird, so dass die Rechnereinheit wenigstens ein Kompensationssignal ermittelt. Besonders vorteilhaft umfasst das Rechnerprogrammprodukt ein rechnerlesbares Medium, auf welchem die Programmcodeabschnitte gespeichert sind. Darüber hinaus kann das Programm direkt in einen internen Speicher der Rechnereinheit ladbar sein. So ist es beispielsweise möglich, das Programm aus einem Netzwerk von einer Datenquelle, beispielsweise einem Server, herunterzuladen und in einen internen Speicher der Rechnereinheit zu laden, so dass der Rechner das Programm ausführen kann. Vorzugsweise ist die Rechnereinheit in die Steuereinheit integriert angeordnet. Die Rechnereinheit kann auch zugleich die Steuereinheit bereitstellen.

Die für das erfindungsgemäße Verfahren angegebenen Vorteile und Wirkungen gelten gleichermaßen für das Rechnerprogrammprodukt sowie für die Steuereinheit.

Weitere Merkmale und Vorteile sind der folgenden Beschreibung von Ausführungsbeispielen anhand der beigefügten Figuren zu entnehmen. In den Figuren bezeichnen gleiche Bezugzeichen gleiche Merkmale und Funktionen.

Es zeigen:

FIG 1     in einer schematischen Blockschaltbilddarstellung eine erste Ausgestaltung für einen Umrichter, der als 6-pulsiger Umrichter ausgebildet ist;

FIG 2     eine schematische Blockschaltbilddarstellung für eine zweite Ausgestaltung eines Umrichters, der als 12-pulsiger Umrichter ausgebildet ist und zwei getrennte Gleichstromzwischenkreise aufweist, die jeweils eine Zwischenkreisinduktivität aufweisen, wobei die Zwischenkreisinduktivitäten der beiden Zwischenkreise magnetisch miteinander gekoppelt sind;

FIG 3     in einer schematischen Blockschaltbilddarstellung eine dritte Ausgestaltung für einen Umrichter, der als 24-pulsiger Umrichter ausgebildet ist und zwei getrennte Gleichstromzwischenkreise mit magnetisch gekoppelten Zwischenkreisinduktivitäten aufweist,

FIG 4     in einer schematischen Diagrammdarstellung eine Darstellung eines Campbell-Diagramms für eine Anordnung gemäß FIG 2,

FIG 5     eine schematische Diagrammdarstellung basierend auf FIG 4, bei der eine Abhängigkeit einer Referenzfrequenz von einer Maschinenfrequenz darstellt ist, und

FIG 6     ein schematisches Blockschaltbild für eine Steuereinheit gemäß der Erfindung.

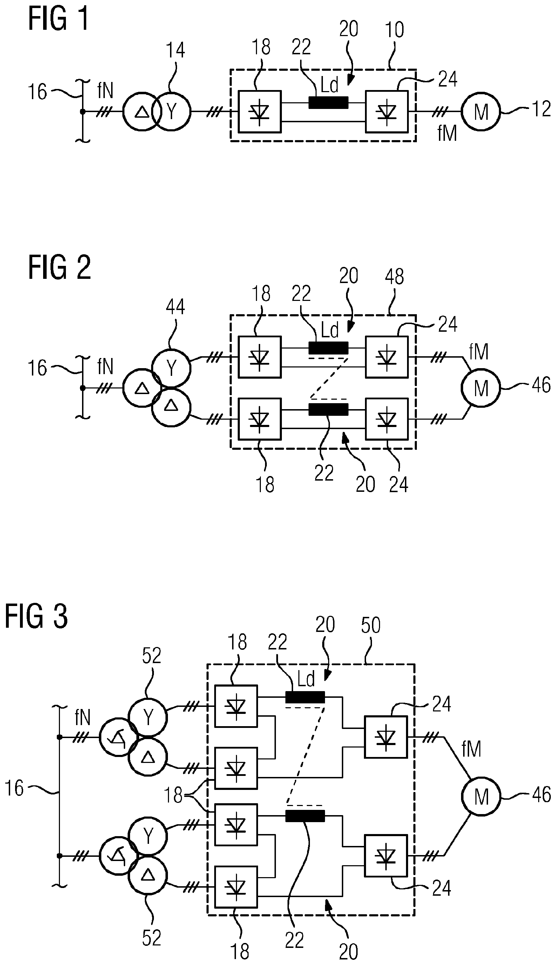

FIG 1 zeigt in einer schematischen Blockschaltbilddarstellung einen 6-pulsigen Umrichter 10, der einen netzseitigen Wechselrichter 18 und einen maschinenseitigen Wechselrichter 24 aufweist. Der Wechselrichter 18 und der Wechselrichter 24 sind über einen Gleichstromzwischenkreis 20 elektrisch miteinander gekoppelt. Der Gleichstromzwischenkreis 20 weist zu diesem Zweck eine Induktivität 22 auf.

Der Wechselrichter 18 ist wechselspannungsseitig bzw. wechselstromseitig an eine Sekundärwicklung eines Transformators 14 angeschlossen. Der Transformator 14 weist eine Primärwicklung auf, die an ein dreiphasiges Wechselspannungsnetz 16, hier das öffentliche Energieversorgungsnetz, angeschlossen ist. Der Transformator 14 ist als Dreiphasen-Transformator ausgebildet, wobei seine Primärwicklung in Dreieckschaltung und seine Sekundärwicklung in Sternschaltung verschaltet sind.

Der Wechselrichter 24 ist wechselspannungsseitig bzw. wechselstromseitig an eine rotierende elektrische Maschine 12 angeschlossen, die für einen dreiphasigen Betrieb ausgelegt ist. Die rotierende elektrische Maschine 12 ist vorliegend eine Synchronmaschine.

FIG 2 zeigt eine alternative Ausgestaltung für einen Umrichter 48, der vorliegend als 12-pulsiger Umrichter ausgebildet ist. Zu diesem Zweck weist der Umrichter 48 zwei netzseitige Wechselrichter 18 sowie zwei maschinenseitige Wechselrichter 24 auf, wobei jeweils einer der Wechselrichter 18 über einen Gleichstromzwischenkreis 20 mit einer Zwischenkreisinduktivität 22 mit einem jeweiligen der beiden maschinenseitigen Wechselrichter 24 elektrisch verbunden ist. Vorliegend ist vorgesehen, dass die beiden Zwischenkreisinduktivitäten 22 der beiden Zwischenkreise 20 magnetisch miteinander gekoppelt sind. In alternativen Ausgestaltungen kann jedoch auch vorgesehen sein, dass eine derartige Kopplung nicht vorgesehen ist.

Der Umrichter 48 stellt maschinenseitig ein 6-phasiges Wechselspannungsnetz bzw. Wechselstromnetz zur Verfügung, an das eine entsprechend ausgerüstete rotierende elektrische Maschine 46 angeschlossen ist. Netzseitig ist der Umrichter 48 über einen Transformator 44 an das dreiphasige Wechselspannungsnetz 16 angeschlossen. Der Transformator 44 weist hierfür eine Primärwicklung in Dreieckschaltung auf, die unmittelbar an das Wechselspannungsnetz 16 angeschlossen ist. Darüber hinaus umfasst der Transformator 44 zwei Sekundärwicklungen, von denen eine in Sternschaltung und eine weitere Dreieckschaltung ausgebildet ist. Jeweils eine der beiden Sekundärwicklungen ist an einen der beiden netzseitigen Wechselrichter 18 des Umrichters 48 angeschlossen.

FIG 3 zeigt ein schematisches Blockschaltbild für eine weitere Ausgestaltung eines Umrichters 50, der vorliegend als 24-pulsiger Umrichter ausgebildet ist. Zu diesem Zweck umfasst der Umrichter 50 zwei maschinenseitige Wechselrichter 24, die - wie in Bezug auf FIG 2 bereits erläutert - an die rotierende elektrische Maschine 46 angeschlossen sind. Netzseitig weist der Umrichter 50 vier Wechselrichter 18 auf, die gleichstromseitig paarweise in Reihe geschaltet an jeweils einem von zwei Gleichstromzwischenkreisen 20 angeschlossen sind. Jeder der Gleichstromzwischenkreise 20 weist wiederum eine Zwischenkreisinduktivität 22 auf, die vorliegend magnetisch gekoppelt sind. Auch hier ist die magnetische Kopplung optional und kann bei alternativen Ausgestaltungen entfallen. Ein jeweiliges, in Reihe geschaltetes Paar von netzseitigen Wechselrichtern 18 ist somit über den jeweiligen Gleichstromzwischenkreis 20 mit einem der maschinenseitigen Wechselrichter 24 elektrisch gekoppelt.

Der Umrichter 50 ist über zwei Transformatoren 52 an das dreiphasige Wechselspannungsnetz 16 angeschlossen. Zu diesem Zweck weist jeder der beiden Transformatoren 52 eine Primärwicklung auf, die vorliegend in Zickzack-Schaltung ausgebildet ist. Sekundärseitig ist jeder der Transformatoren 52 wie der Transformator 44 ausgebildet, das heißt, jeder der Transformatoren 52 weist zwei Sekundärwicklungen auf, von denen eine in Sternschaltung und eine andere in Dreieckschaltung ausgebildet ist.

Jeweils einer der beiden Transformatoren 52 ist an eines der Paare der netzseitigen Wechselrichter 18 angeschlossen, wobei eine der Sekundärwicklungen an einen ersten der in Reihe geschalteten netzseitigen Wechselrichter 18 und die andere der beiden Sekundärwicklungen an den jeweiligen anderen der netzseitigen Wechselrichter 18 angeschlossen. Dadurch koppelt jeder Transformator 52 einen der beiden Gleichstromzwischenkreise 20 über die jeweiligen netzseitigen Wechselrichter 18 mit dem Wechselspannungsnetz 16.

Die hier lediglich beispielhaft dargestellten Umrichterkonzepte für die Umrichter 10, 48, 50 finden üblicherweise Einsatz bei großen Leistungen, beispielsweise im Bereich von etwa einem MW oder größer. Dem Grunde nach können diese Schaltungskonzepte jedoch auch bei kleineren Leistungen zum Einsatz kommen.

Bei derartigen Antriebskonzepten können sogenannte interharmonische Pendelmomente in einem Antriebsstrang bzw. der elektrischen Maschine auftreten, die dadurch verursacht werden können, dass eine Netzseite und eine Maschinenseite in der Regel nicht vollständig elektrisch entkoppelt werden können. In der Regel sind Amplituden solcher Pendelmomente vergleichsweise klein, beispielsweise kleiner als 2% eines Bemessungsmoments bzw. eines Betriebsmoments. Werden jedoch mechanische Eigenfrequenzen im Bereich der elektrischen Maschine 12, 46 angeregt, die häufig in einem Frequenzbereich kleiner als 50Hz liegen, kann ein Pendelmoment einen deutlich größeren Wert annehmen, der sogar mechanisch kritisch sein kann.

Diesem Problem widmet sich die Erfindung. Eine Zwischenkreisleistung in einem der Gleichstromzwischenkreise 20 bzw.einem Teil des Gleichstromzwischenkreises kann ermittelt werden gemäß:

$$Pd = Ud * Id + \sum_{v}\sum_{\mu} UD_v * \cos(\omega_v * t - \phi_v) * Id_\mu * \cos(\omega_\mu * t - \phi_\mu)\mathrm{Ud}$$

Spannungsharmonische, die Frequenzen 0Hz, 6 * $f_N$, 6 * $f_M$, 12 * $f_N$, 12 * $f_M$, ... und dergleichen aufweisen, und Stromharmonische, die die gleichen Frequenzen aufweisen, bewirken aufgrund der durch Produktbildung ermittelten Zwischenkreisleistung die in der folgenden Tabelle angegebenen Frequenzen:

| | ZK Spannung Netzseite | | |
|---|---|---|---|
| DC Strom▼ | DC (gleich) | 6*fn (gegen) | 12*fn (gleich) |
| DC (gleich) | DC | 6*fn (gegen) | 12*fn (gleich) |
| 6*fn (gegen) | 6*fn (gegen) | DC, 12 fn (gleich) | 6*fn, 18 fn (gegen) |
| 12*fn (gleich) | 12*fn (gleich) | 6*fn, 18*fn (gegen) | DC, 24*fn (gleich) |
| 6*fm (gegen) | 6*fm (gegen) | 6*fm-6*fn, 6*fm+6*fn (gleich) | 6*fm-12*fn, 6*fm+12*fn (gegen) |
| 12*fm (gleich) | 12*fm (gleich) | 12*fm-6*fn, 12*fm+6*fn (gegen) | 12*fm-12*fn, 12*fm+12*fn (gleich) |

In der Tabelle sind die erste Zeile und die erste Spalte dem Strom bzw. der Spannung zugeordnet. Die weiteren Tabellenwerte beziehen sich auf Leistungen. Die in der Tabelle mit "gleich" gekennzeichneten Werte sind in den beiden Gleichstromzwischenkreisen 20 bei dem 12-pulsigen Umrichter 48 gemäß FIG 2 phasengleich, wohingegen die mit "gegen" gekennzeichneten Werte gegenphasig sind.

Besondere Beachtung ist auf die folgenden Interharmonischen in der Zwischenkreisleistung zu legen, die in der Tabelle im rechten unteren Bereich angegeben sind, nämlich:

```
6 * fm +/- 6 * fn,

6 * fm +/- 12 * fn,

12 * fm+/- 6 * fn,
```

$$12 * fm +/- 12 * fn,$$

Diese Werte werden vernachlässigbar bzw. zu Null in der Nähe von $f_M = 0,5 * f_N$, $f_M = f_N$ und $f_M = 2 * f_N$. An diesen Positionen besteht die Gefahr von niederfrequenten Leistungspendellungen im Netz und in der elektrischen Maschine, was gleichbedeutend mit entsprechenden niederfrequenten Drehmomentpendelungen ist.

Bei einem 12-pulsigen Umrichter, wie dem Umrichter 48, mit zwei getrennten Gleichstromzwischenkreisen 20 können sich aufgrund der Phasenlage in den beiden Gleichstromzwischenkreisen 20 folgende Interharmonische in der gesamten Zwischenkreisleistung ergeben:

$$6 * f_M +/- 6 * f_N \text{ und } 12 * f_M +/- 12 * f_M$$

An dieser Stelle ist dann insbesondere ein Bereich um $f_M = f_N$ kritisch.

Die vorherigen Überlegungen wurden zwar für einen 12-pulsigen Umrichter mit zwei Gleichstromzwischenkreisen dargelegt, sind jedoch gleichermaßen auf entsprechende andere Umrichter, insbesondere auf einen 6-pulsigen Umrichter, wie dem Umrichter 10, oder einen 24-pulsigen Umrichter, wie dem Umrichter 50, anwendbar.

Um die durch die Interharmonischen bewirkten Problematiken zu vermeiden, wird mit der Erfindung vorgeschlagen, dass durch Modulation eines Aussteuerungsgrades eine Maschinenleistung der elektrischen Maschine 12, 46 moduliert wird. Durch diese Modulation kann die Pendelleistung in der elektrischen Maschine und damit ein Pendelmoment im Luftspalt erzeugt werden, das geeignet ist, die Interharmonischen im Luftspaltmoment zu kompensieren. Zu diesem Zweck kann ein DFT-Regler zur Minimierung der internen harmonischen genutzt werden, wie es im Folgenden noch erläutert werden wird.

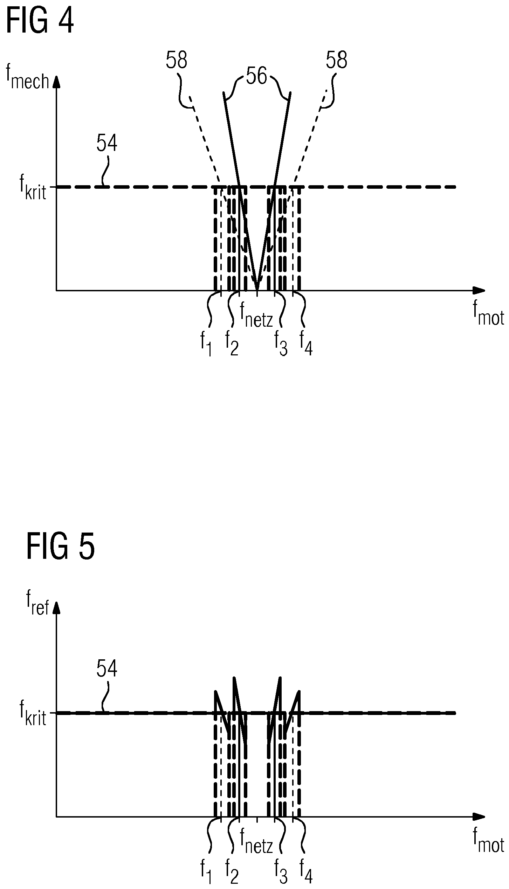

FIG 4 zeigt in einer schematischen grafischen Darstellung als ein Campbell-Diagramm für den Umrichter gemäß FIG 2. Eine Abszisse des Diagramms gemäß FIG 4 ist einer Maschinenfrequenz zugeordnet, wohingegen eine Ordinate einer mechanischen Frequenz der elektrischen Maschine 12, 46 zugeordnet ist. In der Literatur ist die Abszisse hiervon abweichend oft auch der Drehzahl der elektrischen Maschine zugeordnet. Mit 54 ist eine kritische mechanische Frequenz des Antriebsstrangs im Diagramm gemäß FIG 4 bezeichnet. Weiterhin sind in FIG 4 bezogen auf die Netzfrequenz Winkel 56 und 58 dargestellt. Der Winkel 56 ist $12 * |f_{mot} - f_{Netz}|$ zugeordnet. Der Winkel 58 ist $6 * |f_{mot} - f_{Netz}|$ zugeordnet. Aus den Schnittpunkten der Winkel 56, 58 mit der kritischen Frequenz 54 ergeben sich die Frequenzen $f_1$, $f_2$, $f_3$ und $f_4$, die kritische Eigenfrequenzen der rotierenden elektrischen Maschine, insbesondere in Bezug auf den mechanischen Antriebsstrang, darstellen. Aus den Schnittpunkten ergeben sich somit die Maschinenfrequenzen, bei denen die kritische Eigenfrequenz des Wellenstranges angeregt wird. Da vorliegend nur diese Frequenzen kritisch sind, ist auch nur bei diesen Frequenzen eine Regelung gemäß der Erfindung erforderlich. Die mechanischen maschinenseitigen Eigenfrequenzen basieren unter anderem auf Herstellerangaben. Da hier Toleranzen zu beachten sind, ist vorliegend vorgesehen, dass eine entsprechende Regelung bzw. Verfahrensführung nicht nur exakt an den jeweiligen Frequenzen sondern auch in einem gewissen Bereich um die Frequenzen $f_1$, $f_2$, $f_3$ und $f_4$ herum erfolgt.

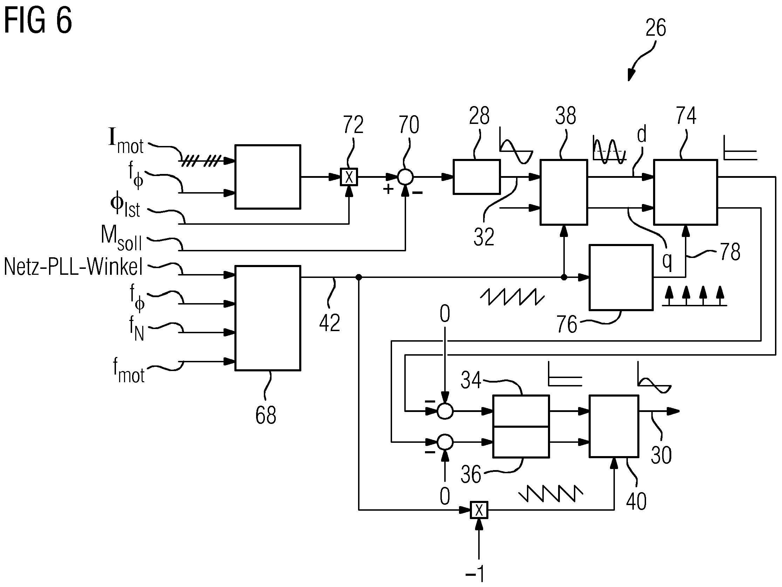

Die Verfahrensführung nutzt vorzugsweise ein Referenzsystem, welches unter anderem einem Wirkmechanismus bezüglich der Interharmonischen berücksichtigt. Das Referenzsystem umfasst insbesondere einen Referenzwinkel 42, der bei bereits bei bestehenden Steuereinheiten 26 (FIG 6) für die Umrichter 10, 48, 50 benutzt wird, um diese zu steuern.

FIG 5 zeigt in einem weiteren schematischen Diagramm eine Referenzfrequenz für eine Ausregelung von Interharmonischen Pendelleistungen. Eine Abszisse ist wiederum einer Maschinenfrequenz zugeordnet, wohingegen eine Ordinate der Referenzfrequenz zugeordnet ist. Mit 54 ist wieder eine Gerade bezeichnet, die parallel zur Abszisse ist und die kritische Frequenz des Antriebsstrangs bezeichnet. Zu erkennen ist, dass im Bereich der Frequenzen $f_1$, $f_2$, $f_3$ und $f_4$ die kritische Frequenz 54 keinen konstanten Wert aufweist, sondern um die jeweiligen vorgenannten Frequenzen herum durch einen geraden Abschnitt 60, 62, 64, 66 dargestellt ist. Die Referenzfrequenz wird außerhalb einer Toleranzbreite um die Frequenzen $f_1$, $f_2$, $f_3$ und $f_4$ auf die kritische Frequenz gesetzt. Innerhalb einer Toleranzbreite um die Frequenzen $f_1$, $f_2$, $f_3$ und $f_4$ wird die Referenzfrequenz entsprechend dem Entstehungsmechanismus der Interharmonischen mit $6 * (fn +/- fmot)$ bzw. $12 * (fn +/- fmot)$ auf den Geradenabschnitten 60, 62, 64, 66 geführt. Durch geeignete Verfahrensführung kann somit erreicht werden, dass die diesbezüglichen Interharmonischen stark gedämpft werden.

FIG 6 zeigt nun ein schematisches Blockschaltbild für eine Steuereinheit 26 gemäß der Erfindung, die ausgebildet ist, eine Verfahrensführung zur Unterdrückung von kritischen Pendelleistungen zu realisieren. Das folgende Ausführungsbeispiel wird für einen Umrichter 48 gemäß FIG 2 erläutert. Die kritische Frequenz entspricht vorliegend einer Eigenfrequenz eines Wellenstrangs, der eine Welle der elektrischen Maschine umfasst.

Zunächst werden drehmomentbezogene Maschinenstromanteile aus elektrischen Maschinenströmen der elektrischen Maschine 46 ermittelt. Zu diesem Zweck werden aus den sechs Strömen, die umrichterseitig für die elektrische Maschine 46 bereitgestellt werden, die momentbildenden Maschinenstromkomponenten berechnet. Dies kann dadurch erfolgen, dass die Komponente eines Stromraumzeigers ermittelt wird, die senkrecht zu einem Flussraumzeiger steht. Sodann wird ein Ist-Wert für einen magnetischen Fluss der elektrischen Maschine 46 ermittelt und die momentbildenden Maschinenstromkomponente mit dem ermittelten Ist-Wert für den magnetischen Fluss durch Multiplikation mittels eines Multiplizierers 72 verknüpft. Dabei können Frequenzen der Interharmonischen aus $6 * (f_{netz} - f_{mot})$ bzw. $12 * (f_{netz} - f_{mot})$ ermittelt werden. Eine Ordnungszahl kann dadurch bestimmt sein, in welchem Bereich gemäß FIG 4 sich die Maschinenfrequenz befindet. Zwischen den in FIG 4 markierten Bereichen kann die Verfahrensführung bzw. Regelung deaktiviert werden.

Der Referenzwinkel 42 wird vorliegend aus Winkeln bestimmt, die das Referenzsystem für Steuerdaten und damit auch für sämtliche Netz- und Maschinenoberschwingungen bilden:

$$\texttt{Referenzwinkel = 6 * (Netzwinkel - Flusswinkel)}$$

bzw.

$$\texttt{Referenzwinkel = Zeichen 12 * (Netzwinkel - Flusswinkel)}$$

Zu diesem Zweck umfasst die Steuereinheit 26 eine Referenzsystemeinheit 68.

Die Steuereinheit 26 nutzt digitale Signalverarbeitung, um die Verfahrensführung auszuführen. Zu diesem Zweck umfasst die Steuereinheit 26 eine nicht dargestellte Rechnereinheit, die mittels eines geeignet ausgebildeten Rechnerprogramms gesteuert wird, sodass die gewünschte Funktion durch die Steuereinheit 26 bereitgestellt wird.

Dabei wird vorliegend durch eine Flankendetektion des Referenzwinkels 42 am Ende einer jeweiligen Periodendauer der Interharmonischen ein Rücksetzsignal erzeugt. Da alle Signale zum Zwecke der digitalen Signalverarbeitung abgetastet werden, entsteht hier ein Jitter in Bezug auf eine Anzahl von Abtastintervallen in einer jeweiligen Periodendauer.

Vom Ist-Wert des Drehmoments wird mittels eines Subtrahierers 70 ein Soll-Wert für das Drehmoment $M_{soll}$ subtrahiert. Das Ergebnissignal der Subtraktion durch den Subtrahierer 70 wird auf einen Bandpassfilter 28 aufgegeben. Der Bandpassfilter 28 ist vorliegend als Filter zweiter Ordnung ausgebildet. Der Bandpassfilter 28 ist auf die mechanische Eigenfrequenz des Antriebsstranges bzw. der elektrischen Maschine 12, 46 bzw.

$$6^{*} (f_{netz} - f_{mot}) \text{ bzw.} 12^{*} (f_{netz} - f_{mot}) \text{ abgestimmt.}$$

Ein Filterausgangssignal 32 des Bandpassfilters 28 wird auf einen Vektordreher 38 gegeben, mittels dem gemäß einer Park-Transformation ein mit dem Referenzwinkel 42 umlaufendes Koordinatensystem bereitgestellt wird. Da vorliegend nur eine einzige Eingangskomponente vorliegt, werden somit bei jeder der Komponenten, nämlich der d-Komponente und der q-Komponente durch den Vektordreher 38 ein Gleichanteil und ein Anteil mit doppelter Referenzfrequenz erzeugt. Die d-Komponente und die q-Komponente werden dann einem Mittelwertbildner 74 zugeführt, der eine Mittelwertbildung für die beiden Komponenten über eine Periodendauer der Referenzfrequenz durchführt. Dadurch wird der Anteil in Bezug auf die doppelte Referenzfrequenz unterdrückt bzw. eliminiert. Zu diesem Zweck kann mittels einer Triggereinheit 76 aus dem Referenzwinkel 42 ein Triggersignal 78 für den Mittelwertbildner 74 erzeugt werden.

Die vom Mittelwertbildner 74 bereitgestellten gemittelten Komponenten, werden sodann jeweils eigenen PI-Reglern 34, 36 zugeführt, die sie jeweils auf Null regeln. Die entsprechenden Ausgangssignale der PI-Regler 34, 36 werden sodann mittels eines weiteren Vektordrehers 40 rücktransformiert, sodass ein vorzugsweise sinusförmiges Modulationssignal bereitsteht, dass zur Modulation bzw. Überlagerung zu dem Netzsteuersignal und/oder dem Maschinensteuersignal dient.

```
Modulationssignal
    = Reglerausgang_d*cos(Referenzwinkel)+Reglerausgang_q
    *sin(Referenzwinkel)
```

Mit der Erfindung ist es somit möglich, dass eine Verfahrensführung lediglich Größen benötigt, die im Umrichter 10, 48, 50 ohnedies zur Verfügung stehen. Es werden also keine weiteren Messwerte der elektrischen Maschine benötigt, insbesondere in Bezug auf an einer Welle der elektrischen Maschine 12, 46 bereitgestelltes Drehmoment. Die Erfindung benötigt für ihre Realisierung im Wesentlichen auch keine Informationen über den Antriebsstrang bzw. die elektrische Maschine hinsichtlich ihrer mechanischen Eigenschaften.

Insgesamt ergeben sich mit der Erfindung die folgenden Vorteile:

Die Luftspaltleistung und das Luftspaltmoment der elektrischen Maschine brauchen lediglich aus dem Ist-Wert der elektrischen Spannung und dem Ist-Wert des elektrischen Stroms für die elektrische Maschine berechnet zu werden.

Eine Auswahl der Ordnungszahlen für die jeweiligen Interharmonischen kann mittels des Campbell-Diagramms erfolgen. Dabei kann die Auswahl abhängig von einer Drehzahl der elektrischen Maschine erfolgen, die keine kritische mechanische Eigenfrequenz der elektrischen Maschine bzw. des Antriebsstranges anregen. In der Regel erweist sich die niedrigste der mechanischen Eigenfrequenzen als besonders kritisch. Darauf basierend werden Drehzahlbereiche definiert, die die Ordnungszahlen berücksichtigen und die Toleranzen in Bezug auf die mechanischen Eigenfrequenzen Rechnung tragen, wobei die Regelung vorzugsweise lediglich in diesen Drehzahlbereichen aktiviert ist. Darüber hinaus kann die Auswahl der Ordnungszahlen auch abhängig von der jeweiligen Umrichtertopologie erfolgen. Bei anderen Umrichtertopologien können andere Ordnungszahlen bzw. Kombinationen von Ordnungszahlen gewählt werden.

Das Referenzsystem für die Interharmonischen kann aus einer Netz-PLL (Phase Locked Loop), einem Flusswinkel (Basis für den maschinenseitigen Steuersatz) und den Ordnungszahlen ermittelt werden. Das Referenzsystem beinhaltet eine Referenzfrequenz und einen Referenzphasenwinkel bzw. Referenzwinkel.

Es wird eine Filterung mit der Referenzfrequenz, insbesondere Bandpassfilterung, des Ist-Wertes des Luftspaltmoments, von dem vorher noch ein Soll-Wert des Drehmoments subtrahiert werden kann, kann durchgeführt werden, wobei die Referenzfrequenz von der Netzfrequenz und der Maschinendrehzahl abhängt und entsprechend mitgeführt wird.

Ferner kann eine Vektordrehung mit dem Referenzwinkel und einer Mittelwertbildung des gefilterten Signales vorgesehen sein, wobei die Vektordrehung einer digitalen Fourier-Transformation (DFT) entspricht. Die durch die Vektordrehung erhaltenen Ausgangssignale beschreiben die beiden kartesischen Komponenten der DFT.

Vorzugsweise werden die beiden kartesischen Komponenten auf zwei PI-Regler geführt, die diese Komponenten zu null regeln. Hierdurch gewonnene Ausgangssignale der der PI-Regler können mittels Vektordrehung unter Nutzung des Referenzwinkels wieder rücktransformiert werden, sodass ein Modulationssignal erhalten wird, welches vorzugsweise sinusförmig sein kann.

Mit dem Modulationssignal bzw. Kompensationssignal 30 können die Wechselrichter so angesteuert werden, dass eine Pendelleistung eingeprägt wird, die die entsprechende Interharmonische Luftspaltleistung und damit das entsprechende Interharmonische Luftspaltmoment kompensiert.

Die vorangehenden Ausführungsbeispiele sollen die Erfindung lediglich erläutern und diese nicht beschränken. Selbstverständlich wird der Fachmann bei Bedarf entsprechende Variationen und Anpassungen vorsehen, ohne den Grundgedanken der Erfindung zu verlassen.

Natürlich können auch einzelne Merkmale bedarfsgerecht in beliebiger Weise miteinander kombiniert werden.

Darüber hinaus können natürlich Vorrichtungsmerkmale auch durch entsprechende Verfahrensschritte und umgekehrt angegeben sein.

**Patentansprüche**

1. Verfahren zum Betreiben eines Umrichters (10,48,50) zum Koppeln einer für einen Betrieb an Wechselspannung ausgebildeten elektrischen Maschine (12,46) mit einem Wechselspannungsnetz (16), bei dem ein an das Wechselspannungsnetz (16) angeschlossener netzseitiger Wechselrichter (18) des Umrichters (10,48,50) mittels eines Gleichstromzwischenkreises (20) mit einem an die elektrische Maschine (12) angeschlossenen maschinenseitigen Wechselrichter (24) des Umrichters (10, 48, 50) elektrisch gekoppelt wird, wobei ein Wandeln von elektrischer Energie durch den netzseitigen Wechselrichter (18) mittels eines Netzsteuersignals und ein Wandeln von elektrischer Energie durch den maschinenseitigen Wechselrichter (24) mittels eines Maschinensteuersignals der Steuereinheit (26) gesteuert wird, mit den Schritten:

- Ermitteln eines drehmomentbezogenen Maschinenstromanteils aus elektrischen Maschinenströmen der elektrischen Maschine (12),
- Erfassen eines Ist-Werts für einen magnetischen Fluss,
- Ermitteln eines Ist-Werts eines Maschinendrehmoments der elektrischen Maschine (12,46) durch Verknüpfen des erfassten magnetischen Flusses mit dem drehmomentbezogenen Maschinenstromanteil,
- Ermitteln einer Drehmomentdifferenz zwischen dem Ist-Wert des Maschinendrehmoments und einem Soll-Wert des Maschinendrehmoments der elektrischen Maschine (12,46),
- Filtern der Drehmomentdifferenz mittels eines Bandpassfilters (28), welches auf eine maschinenseitige Eigenfrequenz abgestimmt ist,
- Ermitteln eines Kompensationssignals (30) durch Verarbeiten eines Filterausgangssignals (32) des Bandpassfilters (28), und
- Überlagern des Kompensationssignals (30) zu dem Netzsteuersignal und/oder dem Maschinensteuersignal.

2. Verfahren nach Anspruch 1, **dadurch gekennzeichnet, dass** Frequenzbereiche für Interharmonische anhand einer Netzfrequenz und einer Maschinenfrequenz, insbesondere einer Maschinendrehzahl, ermittelt werden.

3. Verfahren nach Anspruch 2, **dadurch gekennzeichnet, dass** Verfahren nur für die ermittelten Interharmonischen durchgeführt wird.

4. Verfahren nach einem der vorhergehenden Ansprüche, **da- durch gekennzeichnet**, dass das Verarbeiten des Filterausgangssignals (32) des Bandpassfilters (28) mittels einer Park-Transformation transformiert wird, um eine d-Komponente und eine q-Komponente zu ermitteln, Mittelwerte für die d-Komponente und die q-Komponente ermittelt werden, die Mittelwerte mittels eines PI-Reglers (34,36) auf null geregelt werden und durch eine inverse Park-Transformation das Kompensationssignal (30) ermittelt wird.

5. Verfahren nach Anspruch 4, **dadurch gekennzeichnet, dass** für die d-Komponente und die q-Komponente jeweils ein eigener PI-Regler (34,36) vorgesehen wird.

6. Verfahren nach Anspruch 4 oder 5, **dadurch ge- kennzeichnet**, dass die Park-Transformation und die inverse Park-Transformation mittels eines Vektordrehers (38,40) unter Nutzung eines Referenzwinkels (42) durchgeführt werden.

7. Verfahren nach Anspruch 6, **dadurch gekennzeichnet, dass** der Referenzwinkel (42) zumindest unter Berücksichtigung eines Netzwinkels, der Netzfrequenz, der Maschinenfrequenz und eines Flusswinkels des magnetischen Flusses ermittelt wird.

8. Rechnerprogrammprodukt umfassend ein Programm für eine Rechnereinheit mit Programmcodeabschnitten eines Programms zum Ausführen der Schritte eines Verfahrens nach einem der vorhergehenden Ansprüche, wenn das Programm durch die Rechnereinheit ausgeführt wird, so dass die Rechnereinheit wenigstens ein Kompensationssignal (30) zu dem Netzsteuersignal und/oder dem Maschinensteuersignal ermittelt.

9. Rechnerprogrammprodukt nach Anspruch 8, **dadurch gekennzeichnet , dass** das Rechnerprogrammprodukt ein rechner-lesbares Medium umfasst, auf welchem die Programmcodeabschnitte gespeichert sind.

10. Steuereinheit (26) zum Betreiben eines Umrichters (10, 48,50) zum Koppeln einer für einen Betrieb an Wechselspannung ausgebildeten elektrischen Maschine (12,46) mit einem Wechselspannungsnetz (16), zu welchem Zweck der Umrichter (10, 48,50) einen an das Wechselspannungsnetz (16) angeschlossenen netzseitigen Wechselrichter (18) und einen an die elektrische Maschine (12) angeschlossenen maschinenseitigen Wechselrichter (24) aufweist, die zum elektrischen Koppeln an einen Gleichstromzwischenkreis (20) angeschlossen sind, wobei die Steuereinheit (26) einen netzseitigen Anschluss zum Anschließen an den netzseitigen Wechselrichter (18) aufweist und ausgebildet ist, am netzseitigen Anschluss ein Netzsteuersignal zum Steuern des netzseitigen Wechselrichters (18) bereitzustellen, und wobei die Steuereinheit (26) einen maschinenseitigen Anschluss zum Anschließen an den maschinenseitigen Wechselrichter (24) aufweist und ausgebildet ist, am maschinenseitigen Anschluss ein Maschinensteuersignal zum Steuern des maschinenseitigen Wechselrichters (24) bereitzustellen, wobei die Steuereinheit (26) ausgebildet ist,

- einen drehmomentbezogenen Maschinenstromanteil aus elektrischen Maschinenströmen der elektrischen Maschine (12,46) zu ermitteln,

- einen Ist-Wert für einen magnetischen Fluss zu erfassen,

- einen Ist-Wert eines Maschinendrehmoments der elektrischen Maschine (12,46) durch Verknüpfen des erfassten magnetischen Flusses mit dem drehmomentbezogenen Maschinenstromanteil zu ermitteln,

- eine Drehmomentdifferenz zwischen dem Ist-Wert des Maschinendrehmoments und einem Soll-Wert des Maschinendrehmoments der elektrischen Maschine (12,46) zu ermitteln,

- die Drehmomentdifferenz mittels eines Bandpassfilters (28), welches auf eine maschinenseitige Eigenfrequenz abgestimmt ist, zu filtern,

- ein Kompensationssignal (30) durch Verarbeiten eines Filterausgangssignals (32) des Bandpassfilters (28) zu ermitteln, und

- das Kompensationssignal (30) zu dem Netzsteuersignal und/ oder dem Maschinensteuersignal zu überlagern.

FIG 1

FIG 2

FIG 3

FIG 4

FIG 5

FIG 6

Europäisches
Patentamt

European
Patent Office

Office européen
des brevets

**EUROPÄISCHER RECHERCHENBERICHT**

**Nummer der Anmeldung**

EP 16 19 3303

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | DE 10 2011 079995 A1 (SIEMENS AG [DE]) 31. Januar 2013 (2013-01-31) * Absatz [0038] - Absatz [0039]; Abbildung 1 * | 1-3,8-10 | INV. H02P27/06 H02P23/04 H02P6/10 |
| Y | DE 10 2004 030974 A1 (BOSCH GMBH ROBERT [DE]) 9. Februar 2006 (2006-02-09) * Absatz [0017] - Absatz [0019] * | 1-3,8-10 | |
| A | DE 197 56 955 A1 (INST AUTOMATION UND KOMMUNIKAT [DE]) 1. Juli 1999 (1999-07-01) * Seite 3, Zeile 16 - Zeile 38 * | 1-10 | |
| A | DE 18 06 769 A1 (SIEMENS AG [DE]) 23. Oktober 1969 (1969-10-23) * Spalte 2, Zeile 42 - Zeile 53 * | 1-10 | |

RECHERCHIERTE SACHGEBIETE (IPC)

H02P

Der vorliegende Recherchenbericht wurde für alle Patentansprüche erstellt

| Recherchenort | Abschlußdatum der Recherche | Prüfer |
|---|---|---|
| München | 6. April 2017 | Kruip, Stephan |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 19 3303

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-04-2017

| Im Recherchenbericht angeführtes Patentdokument | Datum der Veröffentlichung | Mitglied(er) der Patentfamilie | | Datum der Veröffentlichung |
|---|---|---|---|---|
| DE 102011079995 A1 | 31-01-2013 | KEINE | | |
| DE 102004030974 A1 | 09-02-2006 | KEINE | | |
| DE 19756955 A1 | 01-07-1999 | KEINE | | |
| DE 1806769 A1 | 23-10-1969 | CH | 472146 A | 30-04-1969 |
| | | DE | 1806769 A1 | 23-10-1969 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10200011079995 A1
- WO 2006113230 A1
- EP 2073375 A1